# EUROPEAN PATENT SPECIFICATION

(11) **EP 3 607 178 B1**
(45) Date of publication and mention of the grant of the patent: **20.01.2021**
(21) Application number: 18713912.6
(22) Date of filing: 27.03.2018
(51) Int. Cl.: F01N 3/10, F01N 3/20, F01N 3/28, F01N 3/30, F01N 9/00, F01N 11/00, F01N 3/021, F01N 3/023, F01N 13/00

(54) **METHOD AND SYSTEM FOR THE REMOVAL OF NOXIOUS COMPOUNDS FROM ENGINE EXHAUST GAS**
VERFAHREN UND SYSTEM ZUR REINIGUNG VON SCHADSTOFFEN AUS MOTORABGAS
PROCÉDÉ ET SYSTEM DE PURIFICATION DES CONTAMINANTS DES GAZ D'ÉCHAPPEMENT DES MOTEURS THERMIQUES

(30) Priority: 06.04.2017 DK PA201700240
(43) Date of publication of application: 12.02.2020
(73) Proprietor: Umicore AG & Co. KG, 63457 Hanau-Wolfgang (DE)
(72) Inventor: GABRIELSSON, Pär L. T., 25438 Helsingborg (SE)
(74) Representative: Lischka, Kerstin
(86) International application number: PCT/EP2018/057802
(87) International publication number: WO 2018/184921

(56) References cited:
- EP-A1- 2 166 207
- EP-A1- 2 802 751
- EP-A2- 2 075 050
- WO-A1-99/36162
- DE-U1-202007 018 423

## Description

The present invention relates to a method and system for reducing emission of nitrogen oxides (NOx) and particulate matter being present in engine exhaust gas. In particular, the method and system of the invention provides an improved reduction of NOx during cold start of the engine.

Typically, exhaust gas cleaning systems of vehicles or stationary engines with lean burning engines are equipped with an oxidation catalyst, a particulate filter and a catalyst for the selective reduction of NOx (SCR) in the presence of a reducing agent.

Oxidation catalysts being active in the oxidation of volatile organic compounds, nitrogen monoxide and carbon monoxide and SCR catalysts are known in the art and disclosed in numerous publications.

The problem with the known SCR catalysts is the relatively low efficiency at exhaust gas temperatures below 250°C.

In particular, cold start emission abatement is an important issue when certifying engines. Different approaches have been explored most of them are based on heating up the exhaust by different engine measures but often lead to a worsened fuel efficiency.

It is known that the SCR reaction can be considerably accelerated, and the low temperature activity can be significantly raised at equimolar amounts of NO and NO₂ in the exhaust gas by the so-called "fast" SCR reaction:

2NH₃ + NO + NO₂ → 2N₂ + 3H₂O.

The usual approach to increase the amount of NO₂ is to use an oxidation catalyst upstream the SCR catalyst to oxidize the NO to NO₂. The problem, however, is that the efficiency of the oxidation catalyst at cold start condition is poor and very low levels of NO₂ are formed at exhaust gas temperature below 200°C.

This invention is based on forming NO₂ externally to the exhaust gas cleaning system in an exhaust gas channel and injecting the prepared NO₂ into the engine exhaust gas in an amount that promotes the fast SCR reaction. NO₂ can be formed from NH₃ by oxidation of the NH₃ to NO over a precious metal containing catalyst in a first step and subsequently oxidized NO₂ in a subsequent step.

Thus, the invention provides in a first aspect a method for the removal of nitrogen oxides, volatile organic compounds and particulate matter from engine exhaust gas comprising the steps of
passing the engine exhaust gas in series through an oxidation catalyst, through a particle filter and a catalyst for selective reduction of nitrogen oxides in presence of ammonia added to the engine exhaust gas either as such or in form of a precursor thereof;
at an engine exhaust gas temperature of below 250°C injecting an effluent gas containing nitrogen dioxide into the engine exhaust gas upstream the catalyst for selective reduction of nitrogen oxides;
providing the effluent gas containing nitrogen dioxide by steps of
catalytically oxidizing ammonia with an oxygen containing atmosphere to an effluent gas comprising nitrogen monoxide and oxygen in presence of an oxidation catalyst;
cooling the effluent gas to ambient temperature and oxidizing the nitrogen monoxide in the cooled effluent gas to nitrogen dioxide.

Cleaning methods and systems for use in the cleaning of engine exhaust gas from a compression ignition engine comprising passing the engine exhaust gas in series through an oxidation catalyst (DOC), through a particle filter (PDF) and a catalyst for selective catalytic reduction of nitrogen oxides (SCR)in presence of ammonia added to the engine exhaust gas either as such or in form of urea precursor are per se known in the art.

DE 20 2007 018 423 U discloses a device for cleaning exhaust gases of vehicles with a predominantly lean-burn internal combustion engine, comprising an engine-independent source for providing nitrogen dioxide NO₂ or nitrous oxide N₂O₄ or mixtures thereof, an exhaust system containing a diesel particle filter or an SCR catalytic converter or a nitrogen oxide storage catalytic converter or combinations thereof, one or several supply lines that connect the source independent of the engine for providing nitrogen dioxide NO₂ or nitrogen tetroxide N₂O₄ or mixtures thereof to the exhaust system, one or more valves for regulating the flow of nitrogen dioxide NO2 or nitrogen tetroxide N₂O₄ or mixtures thereof in the supply line or from the from the engine independent source to the exhaust system through the supply line and one or more injection units in the exhaust system as metering devices at the end of the supply line.

WO 99/36162 discloses a method for controlling pollutants such as NO₂ in exhaust gases from internal combustion engines, wherein ozone is reacted with NO to form NO₂, which is then reduced catalytically to N₂ by reacting NO2 with ammonia. The NO₂ produced can react with the particulates of a Diesel engine exhaust gas to regenerate a particulate filter.

EP 2 166 207 discloses a device for cleaning an exhaust gas flow from an internal combustion engine. An aqueous urea solution is used as reducing agent for the SCR catalyst. The hydrolysis of urea takes places in a partial exhaust gas flow that is arranged as close to the engine as possible. This partial flow exhaust gas line is thermally coupled to at least one turbine line leading a hot exhaust gas stream to an exhaust gas turbine of an exhaust gas turbo charger. The aim of this invention is to prevent the formation of cyanuric acid which may clog the SCR catalyst.

EP 2 802 751 A1 discloses an exhaust system for reducing particulate matter and NO2 levels in exhaust gas from diesel engines. The exhaust systems comprises a diesel particulate filter; an inlet for receiving exhaust gases from a diesel engine; a first conduit capable of providing a first fluid connection between the inlet and the diesel particulate filter; a second conduit capable of providing a second fluid connection between the inlet and the diesel particulate filter; a diesel oxidation catalyst in the second conduit, the diesel oxidation catalyst catalysing hydrocarbon combustion and the formation of NO₂ and having high HC activity and high NO₂ activity; a valve mechanism for selectively directing exhaust gases from the inlet to the diesel particulate filter through the first conduit or the second conduit; wherein exhaust gases that pass from the inlet to the diesel particulate filter through the first conduit but not the second conduit will not encounter a diesel oxidation catalyst; and a fuel injector for injecting fuel upstream of the diesel oxidation catalyst. The exhaust system may optionally be combined with an upstream SCR. However, the aim of this invention is to reduce tailpipe NO₂ emissions, and it is silent about the optimum No to NO₂ ratio in the SCR reaction.

EP 2 075 050 A1 discloses a method for improving the hydrolysis of a reducing agent in an exhaust gas aftertreatment system in internal combustion engines operated with excess air, such as diesel and gasoline engines with direct injection. The method according to the invention is used in an exhaust gas aftertreatment system for the selective catalytic reduction of nitrogen oxides, with a smaller exhaust gas partial stream branching upstream of the SCR catalytic converter from the exhaust gas stream, in which a metering device for supplying a reducing agent and downstream a hydrolysis catalytic converter is arranged and the partial exhaust gas stream downstream of the hydrolysis catalytic converter and upstream of the SCR catalytic converter is returned to the exhaust gas stream. The invention is based on the idea of advantageously keeping the temperature at the hydrolysis catalytic converter within predetermined limits by actively controlling or regulating the amount of exhaust gas conducted via the partial exhaust gas flow, and thus avoiding the cooling of the hydrolysis catalytic converter without influencing the efficiency of the internal combustion engine.

The problem with the known methods and systems is the relatively low efficiency of the SCR catalyst at cold start conditions below exhaust gas temperatures at 250°C, as mentioned hereinbefore. This problem is solved by the invention with injection of NO₂ into the engine exhaust gas during cold start temperatures to promote the "fast" SCR reaction. This reaction is responsible for the promotion of low temperature SCR by NO₂.

Above 250°C NO contained in the engine exhaust gas, when leaving the engine is oxidised to NO₂ by contact with the DOC. Thus, above temperatures of 250°C all the amount of formed NO₂ can be used for passive soot regeneration of the filter and the fast SCR reaction.

Consequently, injection of NO₂ into the engine exhaust gas can be disrupted when the gas temperature reaches 250°C. Ammonia oxidation to NO, is usually performed in a reactor with a noble metal catalyst, typically platinum or an alloy of platinum with other precious metals as minor components at reaction temperatures of between 250 and 800°C in presence of oxygen containing atmosphere, like air.

To provide the required reaction temperature, the oxidation reactor can be heated by e.g. electrical heating or induction heating.

In an embodiment, the oxygen containing atmosphere includes hot recirculated engine exhaust gas which provides than additionally part of the oxidation reactor heating duty.

NO formed from NH₃ by oxidation of the NH₃ in contact with a precious metal containing catalyst in a first step, is subsequently oxidized to NO₂ in the NO containing effluent gas from the first step by cooling the gas to ambient temperature to push the equilibrium reaction 2NO+O₂⇄2NO₂ towards formation of NO₂ in the above reaction scheme.

The term "ambient temperature" as used herein, shall mean any temperature prevailing in the surroundings of a vehicle or stationary engine employing the method and system of the invention. Typically, the ambient temperature will be between -20°C and 40°C.

Cooling and oxidation of the NO containing effluent gas can be performed in an aging reactor sized so that the residence time of the gas is about 1 minute or longer.

In an embodiment the oxidation reaction is performed in presence of a catalyst promoting the oxidation of NO to NO₂. Those catalysts are known in the art and include Pt on TiO₂, Pt on SiO₂ and activated carbon.

As mentioned hereinbefore the desired fast SCR reaction requires equal amounts of NO and NO₂. Consequently, the amount of NO₂ injected into the engine exhaust gas at cold start conditions with a temperature below 250°C is controlled to result in 45 to 55% by volume of the nitrogen oxides content in the engine exhaust gas is NO₂ at inlet to the SCR catalyst unit.

NO₂ can be used to oxidize soot particles captured on the DPF and is useful in the passive regeneration of the DPF.

Thus, in an embodiment of the invention, effluent gas containing nitrogen dioxide is injected upstream the particle filter.

In order to facilitate a reliable DPF regeneration by combustion of accumulated soot and simultaneously remove hydrocarbons and carbon monoxide, the DPF is preferably provided with a catalytic coating.

Catalysts active in soot combustion are per se known in the art. An example of such a catalyst is palladium combined with CeO₂ stabilized with ZrO₂ or platinum on alumina. Above 250°C the NO in the exhaust gas is oxidised to NO₂ by contact with the DOC. The formed NO₂ is used in the passive regeneration of the DPF. Thus, above temperatures of 250°C all the amount of formed NO₂ can be used for passive soot regeneration of the filter and to promote the fast SCR and injection of NO₂ containing gas is disrupted.

In a further aspect, the invention provides a system for use in the method according to the invention.

The system comprises within an engine exhaust gas channel in series,
an oxidation catalyst unit for the oxidation of volatile organic compounds and carbon monoxide to carbon dioxide and water and nitrogen oxide to nitrogen dioxide;
a particle filter;
a catalyst for selective reduction of nitrogen oxides; upstream the catalyst for selective reduction of nitrogen oxides, injection means for injection of ammonia or a urea solution into the engine exhaust gas channel;
upstream the catalyst for selective reduction of nitrogen oxides, injection means for injection of nitrogen dioxide containing effluent gas; and
outside the exhaust gas channel,
an ammonia oxidation catalyst; and
means for cooling and oxidizing nitrogen monoxide containing effluent gas from the ammonia oxidation catalyst connected at its outlet end to the injection means for injection of nitrogen dioxide containing effluent gas.

In an embodiment of the invention, the injection means for injection of nitrogen dioxide containing effluent gas is arranged upstream the particle filter. With this embodiment passive regeneration of the particle filter is possible at lower temperatures, before the engine exhaust gas reaches a temperature at which the upstream oxidation catalyst generates sufficient amounts of NO₂.

As mentioned above, the oxidation reaction of NO to NO₂ needs a residence time of the NO containing gas of about 1 minute. Typically, 1-2 minutes.

This can be achieved, preferably when shaping the cooling and oxidizing means as a spirally wound tube with a length resulting in the desired residence time of the gas passing through the tube.

In another embodiment, the means for cooling and oxidizing nitrogen monoxide containing effluent gas is provided with an oxidation catalyst is provided with an oxidation catalyst promoting the oxidation of NO to NO₂.

In further an embodiment, the particle filter is catalysed with catalyst active in burning off soot.

## Claims

1. A method for the removal of nitrogen oxides, volatile organic compounds and particulate matter from engine exhaust gas, comprising the steps of passing the engine exhaust gas in series through an oxidation catalyst, through a particle filter and a catalyst for selective reduction of nitrogen oxides in presence of ammonia added to the engine exhaust gas either as such or in form of a precursor thereof;
at an engine exhaust gas temperature of below 250°C injecting an effluent gas containing nitrogen dioxide into the engine exhaust gas upstream the catalyst for selective reduction of nitrogen oxides;
**characterized in that**
the effluent gas containing nitrogen dioxide is provided by steps of
catalytically oxidizing ammonia or a precursor thereof with an oxygen containing atmosphere to an effluent gas comprising nitrogen monoxide and oxygen in presence of an oxidation catalyst;
cooling the effluent gas to ambient temperature and oxidizing the nitrogen monoxide in the cooled effluent gas to nitrogen dioxide.

2. The method of claim 1, wherein the oxygen containing atmosphere comprises engine exhaust gas.

3. The method of claim 1, wherein the oxygen atmosphere is ambient air.

4. The method according to any one of claims 1 to 3, wherein effluent gas containing nitrogen dioxide is injected upstream the particle filter.

5. The method according to any one of claims 1 to 4, wherein the effluent gas containing nitrogen dioxide is injected into the engine exhaust gas in an amount resulting in 45 to 55% by volume of the nitrogen oxides is nitrogen dioxide at inlet to the catalyst for selective reduction of nitrogen oxides.

6. The method according to any one of claims 1 to 5, wherein the oxidation of the nitrogen monoxide in the cooled effluent gas to nitrogen dioxide is performed in presence of an oxidation catalyst.

7. The method according to any one of claims 1 to 6, wherein the particle filter is catalysed with a catalyst active in burning off soot.

8. System for use in the method according to any one of claims 1 to 7, comprising within an engine exhaust gas channel in series,
an oxidation catalyst unit for the oxidation of volatile organic compounds and carbon monoxide to carbon dioxide and water and nitrogen oxide to nitrogen dioxide;
a particle filter;
a catalyst for selective reduction of nitrogen oxides; upstream the catalyst for selective reduction of nitrogen oxides, injection means for injection of ammonia or a urea solution into the engine exhaust gas channel;
upstream the catalyst for selective reduction of nitrogen oxides, injection means for injection of nitrogen dioxide containing effluent gas;
**characterized in that** the system comprises,
outside the exhaust gas channel,
an ammonia oxidation catalyst; and
means for cooling and oxidizing nitrogen monoxide containing effluent gas from the ammonia oxidation catalyst connected at its outlet end to the injection means for injection of nitrogen dioxide containing effluent gas.

9. The system of claim 8, wherein the injection means for injection of nitrogen dioxide containing effluent gas is arranged upstream the particle filter.

10. The system of claim 8 or 9, wherein the means for the cooling and oxidizing nitrogen monoxide containing effluent gas is in form of a spirally wound tube.

11. The system of any one of claims 8 to 10, wherein the means for the cooling and oxidizing nitrogen monoxide containing effluent gas is provided with an oxidation catalyst.

12. The system of any one of claims 8 to 11, wherein the particle filter is catalysed with catalyst active in burning off soot.

## Patentansprüche

1. Verfahren zur Entfernung von Stickoxiden, flüchtigen organischen Verbindungen und Feinstaub aus Motorabgas, umfassend die Schritte
Leiten des Motorabgases in Reihe durch einen Oxidationskatalysator, durch einen Partikelfilter und einen Katalysator zur selektiven Reduktion von Stickoxiden in Gegenwart von Ammoniak, das dem Motorabgas entweder als solches oder in Form eines Vorläufers davon zugesetzt wird;
bei einer Motorabgastemperatur von unter 250 °C Einspritzen eines Stickstoffdioxid enthaltenden Abströmgases in das Motorabgas stromaufwärts des Katalysators zur selektiven Reduktion von Stickstoffoxiden;
**dadurch gekennzeichnet, dass**
das Abströmgas, das Stickstoffdioxid enthält, bereitgestellt ist durch die Schritte
katalytisches Oxidieren von Ammoniak oder eines Vorläufers davon mit einer sauerstoffhaltigen Atmosphäre zu einem Abströmgas, das Stickstoffmonoxid und Sauerstoff umfasst, in Gegenwart eines Oxidationskatalysators;
Abkühlen des Abströmgases auf Umgebungstemperatur und Oxidieren des Stickstoffmonoxids in dem abgekühlten Abströmgas zu Stickstoffdioxid.

2. Verfahren nach Anspruch 1, wobei die sauerstoffhaltige Atmosphäre Motorabgas umfasst.

3. Verfahren nach Anspruch 1, wobei die Sauerstoffatmosphäre Umgebungsluft ist.

4. Verfahren nach einem der Ansprüche 1 bis 3, wobei Stickstoffdioxid enthaltendes Abströmgas stromaufwärts des Partikelfilters eingespritzt wird.

5. Verfahren nach einem der Ansprüche 1 bis 4, wobei das Abströmgas, das Stickstoffdioxid enthält, in das Motorabgas in einer Menge eingespritzt wird, die dazu führt, dass 45 bis 55 Vol.-% der Stickstoffoxide am Einlass zu dem Katalysator zur selektiven Reduktion von Stickstoffoxiden Stickstoffdioxid sind.

6. Verfahren nach einem der Ansprüche 1 bis 5, wobei die Oxidation des Stickstoffmonoxids in dem gekühlten Abströmgas zu Stickstoffdioxid in Gegenwart eines Oxidationskatalysators durchgeführt wird.

7. Verfahren nach einem der Ansprüche 1 bis 6, wobei der Partikelfilter mit einem rußabbrennaktiven Katalysator katalysiert wird.

8. System zur Verwendung in dem Verfahren nach einem der Ansprüche 1 bis 7, umfassend innerhalb eines Motorabgaskanals in Reihe,
eine Oxidationskatalysatoreinheit zur Oxidation von flüchtigen organischen Verbindungen und Kohlenmonoxid zu Kohlendioxid und Wasser und Stickstoffoxid zu Stickstoffdioxid;
einen Partikelfilter;
einen Katalysator zur selektiven Reduktion von Stickoxiden;
stromaufwärts des Katalysators zur selektiven Reduktion von Stickoxiden, Einspritzmittel zur Einspritzung von Ammoniak oder einer Harnstofflösung in den Motorabgaskanal;
stromaufwärts des Katalysators zur selektiven Reduktion von Stickstoffoxiden, Einspritzmittel zur Einspritzung von Stickstoffdioxid enthaltendem Abströmgas;
**dadurch gekennzeichnet, dass** das System,
außerhalb des Abgaskanals,
einen Ammoniakoxidationskatalysator; und
Mittel zum Kühlen und Oxidieren von Stickstoffmonoxid enthaltendem Abströmgas aus dem Ammoniakoxidationskatalysator, das an seinem Auslassende mit dem Einspritzmittel zur Einspritzung von Stickstoffdioxid enthaltendem Abströmgas verbunden ist, umfasst.

9. System nach Anspruch 8, wobei das Einspritzmittel zur Einspritzung von Stickstoffdioxid enthaltendem Abströmgas stromaufwärts des Partikelfilters angeordnet ist.

10. System nach Anspruch 8 oder 9, wobei das Mittel zum Kühlen und Oxidieren von Stickstoffmonoxid enthaltendem Abströmgas in Form eines spiralförmig gewundenen Rohrs vorliegt.

11. System nach einem der Ansprüche 8 bis 10, wobei das Mittel zum Kühlen und Oxidieren von Stickstoffmonoxid enthaltendem Abströmgas mit einem Oxidationskatalysator versehen ist.

12. System nach einem der Ansprüche 8 bis 11, wobei der Partikelfilter mit rußabbrennaktivem Katalysator katalysiert wird.

## Revendications

1. Procédé d'élimination d'oxydes d'azote, de composés organiques volatiles et de matières particulaires, des gaz d'échappement des moteurs, comprenant les étapes consistant
à faire passer les gaz d'échappement de moteur successivement par un catalyseur d'oxydation, par un filtre à particules et par un catalyseur de réduction sélective d'oxydes d'azote en présence d'ammoniac ajouté aux gaz d'échappement du moteur, soit en tant que tel soit sous la forme d'un précurseur de celui-ci ;
à une température des gaz d'échappement du moteur de moins 250 °C, à injecter un gaz effluent contenant du dioxyde d'azote dans les gaz d'échappement du moteur en amont du catalyseur de réduction sélective d'oxydes d'azote ;
**caractérisé en ce que**
le gaz effluent contenant du dioxyde d'azote est fourni au cours d'étapes
d'oxydation catalytique de l'ammoniac, ou d'un précurseur de celui-ci, avec une atmosphère contenant de l'oxygène pour donner un gaz effluent comprenant du monoxyde d'azote et de l'oxygène en présence d'un catalyseur d'oxydation ;
de refroidissement du gaz effluent à la température ambiante, et d'oxydation du monoxyde d'azote présent dans le gaz effluent refroidi pour donner du dioxyde d'azote.

2. Procédé selon la revendication 1, dans lequel l'atmosphère contenant de l'oxygène comprend des gaz d'échappement du moteur.

3. Procédé selon la revendication 1, dans lequel l'atmosphère contenant de l'oxygène est l'air ambiant.

4. Procédé selon l'une des revendications 1 à 3, dans lequel le gaz effluent contenant du dioxyde d'azote est injecté en amont du filtre à particules.

5. Procédé selon l'une des revendications 1 à 4, dans lequel le gaz effluent contenant du dioxyde d'azote est injecté dans les gaz d'échappement du moteur dans une quantité résultant en ce que 45 à 55 % par volume de l'oxyde d'azote est du dioxyde d'azote à l'entrée du catalyseur de réduction sélective d'oxydes d'azote.

6. Procédé selon l'une des revendications 1 à 5, dans lequel l'oxydation du monoxyde d'azote en dioxyde d'azote dans le gaz effluent refroidi se fait en présence d'un catalyseur d'oxydation.

7. Procédé selon l'une des revendications 1 à 6, dans lequel un catalyseur actif en combustion de suie se dépose sur le filtre à particules.

8. Dispositif à utiliser dans le procédé selon l'une des revendications 1 à 7, comportant à l'intérieur d'un canal de gaz d'échappement de moteur, successivement :
une unité catalytique d'oxydation pour l'oxydation de composés organiques volatiles et du monoxyde de carbone en dioxyde de carbone et en eau, et de l'oxyde d'azote en dioxyde d'azote ;
un filtre à particules ;
un catalyseur de réduction sélective d'oxydes d'azote ;
en amont le catalyseur de réduction sélective d'oxydes d'azote, des moyens d'injection pour l'injection d'ammoniac ou d'une solution d'urée dans le canal de gaz d'échappement de moteur ;
en amont le catalyseur de réduction sélective d'oxydes d'azote, de moyens d'injection pour l'injection de gaz d'effluent contenant du dioxyde d'azote ;
**caractérisé en ce que** le système comprend,
à l'extérieur du canal de gaz d'échappement,
un catalyseur d'oxydation de l'ammoniac ; et
des moyens de refroidissement et d'oxydation du gaz effluent contenant du monoxyde d'azote provenant du catalyseur d'oxydation de l'ammoniac connecté à son extrémité de sortie aux moyens d'injection utilisés pour l'injection de gaz effluent contenant du dioxyde d'azote.

9. Le dispositif de la revendication 8, dans lequel les moyens d'injection utilisés pour l'injection de gaz effluent contenant du dioxyde d'azote sont disposés en amont du filtre à particules.

10. Le dispositif de la revendication 8 ou 9, dans lequel les moyens de refroidissement et d'oxydation du gaz effluent contenant du monoxyde d'azote ont la forme d'un tube à enroulement hélicoïdal.

11. Le dispositif de l'une des revendications 8 à 10, dans lequel les moyens de refroidissement et d'oxydation du gaz effluent contenant du monoxyde d'azote sont dotés d'un catalyseur d'oxydation.

12. Le dispositif de l'une des revendications 8 à 11, dans lequel un catalyseur actif en combustion de suie se dépose sur le filtre à particules.
